# EUROPEAN PATENT SPECIFICATION

(11) **EP 0 264 872 B1**
(45) Date of publication and mention of the grant of the patent: **12.01.1994**
(21) Application number: 87115226.0
(22) Date of filing: 17.10.1987
(51) Int. Cl.: H04N 1/00

(54) **Image input processor**
Bildeingangsprozessor
Processeur d'entrée d'images

(30) Priority: 20.10.1986 JP 249828/86; 20.10.1986 JP 250404/86; 20.10.1986 JP 250405/86; 20.10.1986 JP 250409/86; 20.10.1986 JP 250410/86; 20.10.1986 JP 250411/86
(43) Date of publication of application: 27.04.1988
(73) Proprietor: SHARP KABUSHIKI KAISHA, Osaka 545 (JP)
(72) Inventor: Tsujioka, Hiroshi, Ikoma-gun Nara-ken (JP); Yatsuzuka, Yasuhumi, Nara-shi Nara-ken (JP); Yoneda, Shigeo, Yamatokoriyama-shi Nara-ken (JP)
(74) Representative: Selting, Günther, Dipl.-Ing.

(56) References cited:
- DE-A- 3 732 768
- PATENT ABSTRACTS OF JAPAN, vol. 8, no. 209, (E-268)[1646], 22nd September 1984;& JP-A-59 95 766 (HITACHI SEISAKUSHO K.K.) 01-06-1984
- PATENT ABSTRACTS OF JAPAN, vol. 8, no. 243 (E-277)[1680], 8th November 1984;JP-A-59 122 168 (FUJITSU K.K.) 14-07-1984
- PATENT ABSTRACTS OF JAPAN, vol. 7, no. 200 (E-196)[1345], 3rd September 1983; & JP-A-58 97 963 (CANON K.K.) 10-06-1983

## Description

The present invention relates to a word processing system which is arranged to read and print character information. By way of such a word processing system a character information can be reach with the read character information being capable to be processed in order to be print.

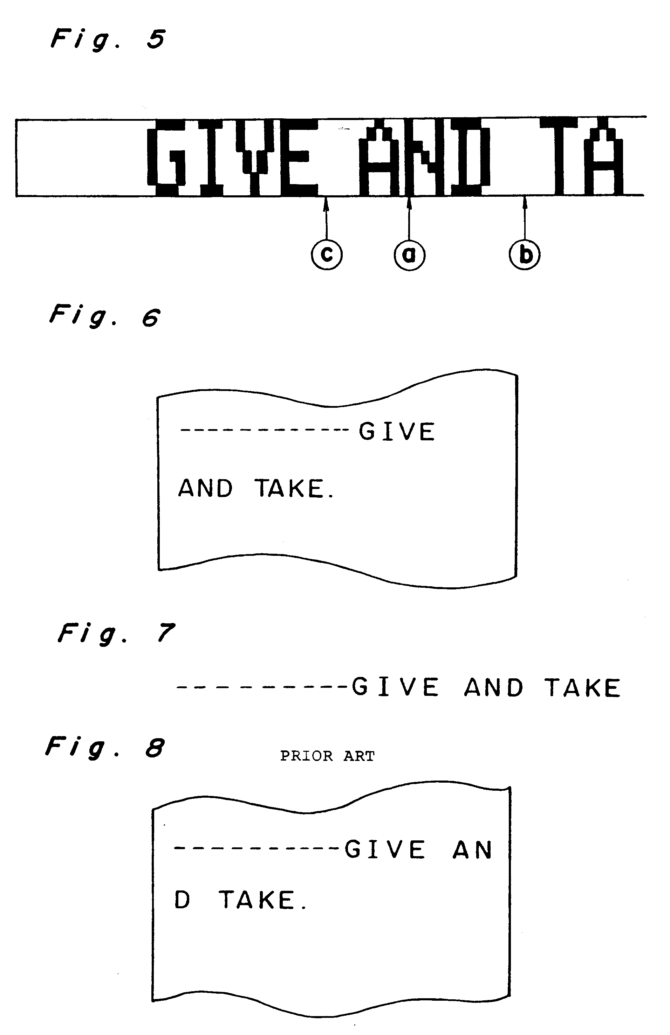

The conventionally used reader units are comprised of a scanner unit for reading characters by the employment of a sensor, and a printer for printing the read character. Supposing, for example, that a sentence shown in Fig. 7 is read by the scanner in order to be printed. Due to the limit of the printing width of the printer it might undesirably happen that a word in the sentence (AND in Fig. 8) is divided halfway, making no sense.

It is the object of the present invention to provide a word processing system printing the read characters in a more suitable way with the word recognition capability being improved.

According to the invention there is provided an improved word processing system which is provided with a space detection means for detecting space from the data read by a scanner, and a space judgement means which, by setting the space width so as to distinguish the space between words from that between characters in a word, judges that the space width detected by the space detection means is a space between words when the space width detected by the space detection means is larger than the set space width. The word processing system further includes a scanner for reading data, a printer for printing the read data, and a line control means which controls the space detection means to detect the last space between words of the data in a line, so that the line is changed at the detected space at the time of printing by the printer.

Generally, the space width between adjacent two words is sufficiently larger than the space width between characters in a word. Therefore, if the space width by which the space width between words and the space width between characters in a word can be distinguished from each other is set beforehand, and the space width detected by the space detection means is compared with the set space width, the space between adjacent two words can be detected. Moreover, the data between adjacent two spaces between words can be treated as one block forming a word.

These and other objects and features of the present invention will become clear from the following description taken in conjunction with a preferred embodiment thereof with reference to the accompanying drawings, in which:
- Fig. 1: is a flow-chart showing the judging procedure of space in a word processing system according to a preferred embodiment of the present invention,
- Fig. 2: is a block diagram of a copier to which the word processing system of the preferred embodiment of the present invention is applied,
- Fig. 3: is a view explanatory of the space judgement according to the word processing system of the preferred embodiment of the present invention,
- Fig. 4: is a view of a memory for storing the data in the word processing system of the preferred embodiment of the present invention,
- Fig. 5: is a view of the data read according to the word processing system of the preferred embodiment of the present invention,
- Fig. 6: is a view of one example of the printed output in the word processing system according to the preferred embodiment of the present invention,
- Fig. 7: is a view of a sentence which is an object for reading and
- Fig. 8: is a view of one example of the printed output in a prior art.

Before the description of the present invention proceeds, it is to be noted that like parts are designated by like reference numerals throughout the accompanying drawings.

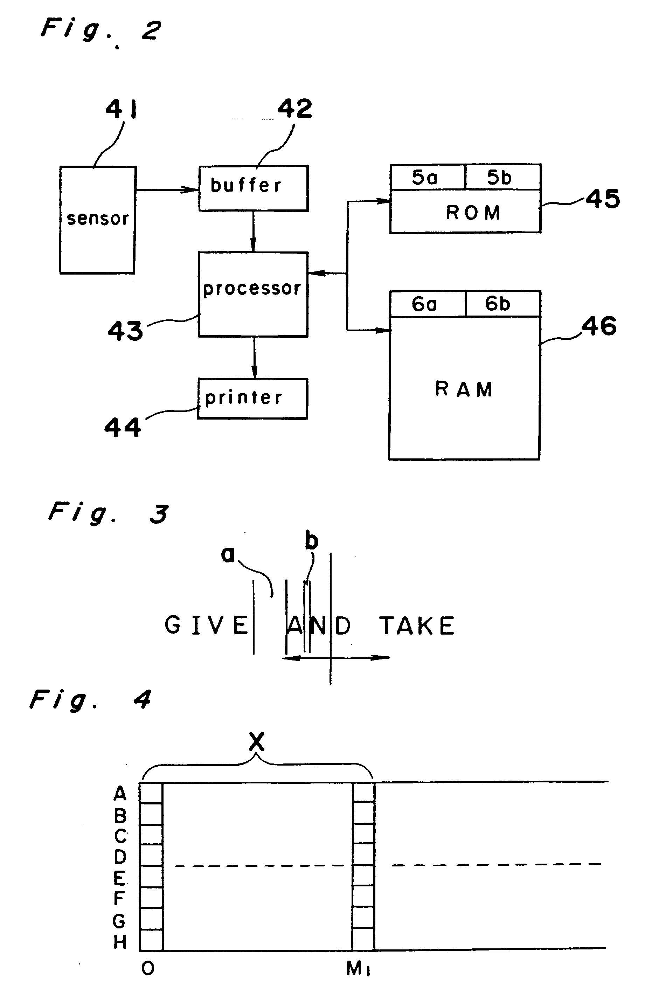

Fig. 2 is a block diagram of a word processing system applied to a copier according to a preferred embodiment of the present invention.

A sensor unit 41 scans light over an original, and converts characters of the original into electric signals. The data read by the sensor unit 41 is temporarily stored in a temporary memory or a buffer 42. A processor 43 reads the data stored in the buffer 42 so as to write in RAM 46. In printing, the processor 43 reads the data to be printed out of the memory 46 together with the data stored in ROM 45 for control of printing, and sends the same to the printer 44. The printer 44 prints out the data.

How a word block is detected in the copier of the sixth embodiment of the present invention will be described hereinbelow.

With reference to an English sentence of Fig. 3, reference a is a space between two adjacent words, and reference b represents a space between two adjacent characters in a word. Generally, a formula a>>b is established. Therefore, if a detection level is set between the values of a and b, a word can be detected by the detection level as to from where it starts to where it ends. The English sentence can be processed by blocks of a word.

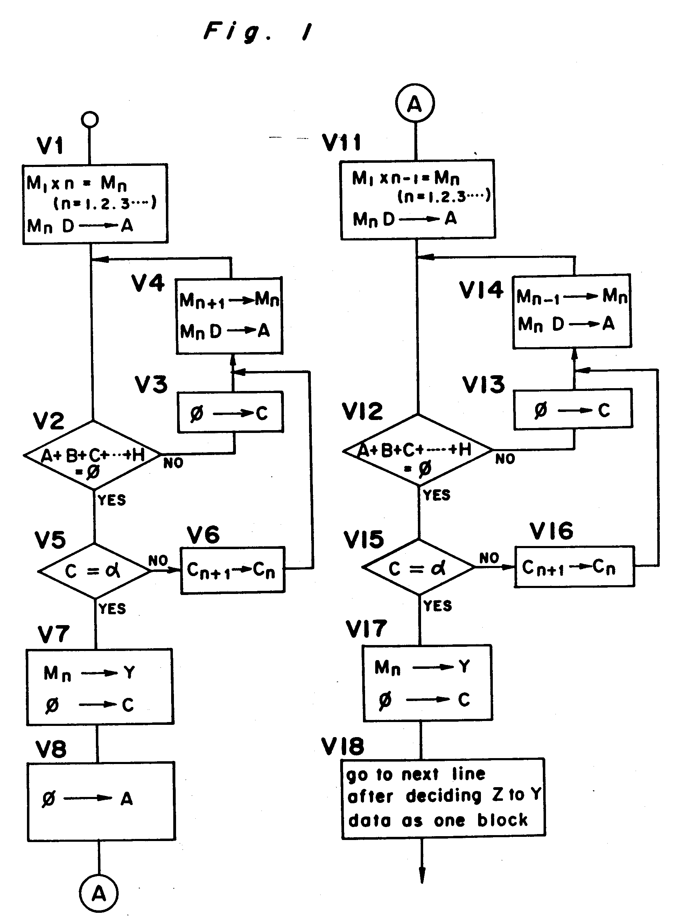

Fig. 1 is a flow-chart of a word detection procedure in the copier of the present invention.

According to the preferred embodiment of the present invention, the soft process is employed which will be explained by the use of a 8-bit (A-H) memory shown in Fig. 4. This memory stores the largest printing width in a memory address M1. Portions to be processed into blocks of a word exist at M1 x n (n=1, 2, 3, ...) points, namely, an integral multiple of M1 points.

First, Mn (n=1) data, MnD (n=1) is transferred to A register (step V1). It is detected there whether or not each of the bits A-H in the data MnD is all zero so as to judge a space (V2). If it is not a space, the space width is set to be 0 (V3). Then, the data in the next upper address is transferred to A register (V4), and the flow then returns to step V2, when the above-described detection is repeated in the same manner.

If it is judged to be a space in step V2, then it is detected whether the number of bits in the same space (space width C) reaches a predetermined value α (the predetermined value between a and b illustrated in Fig. 3) (V5). When the number of bits in the space does not reach the predetermined value α, the space width D is increases (V6), with the flow moving to step V4 in which the data in the next upper address is transferred to A register again. Then the detection as described above is repeated.

When it is detected in step V5 that the space width C becomes the predetermined value α, the memory address Mn when the space is detected to be the first space in the word is filed in Y register, and the space width C is returned to be 0 (V7). Also, A register is returned to be 0 (V8). Similarly, in steps V11-V16, data is checked sequentially from the address M1 to lower addresses. When the space width C is equal to the predetermined value α, the address at that time is filed in Z register. The space width C is returned to be 0 (V7). Thus, in the manner as above, the data between Z and Y can be recognized as one block of a word. In step V18, the data between Z-Y is determined as one word block, and the succeeding line is going to be processed.

Hereinbelow, reading and printing operation of the data will be described.

Supposing that characters printed on an original as shown in Fig. 7 are desired to be read, a sensor reader unit 41 is scanned on the original from left to right. During that time, the printed characters reflect light (not shown), and accordingly the sensor receives the reflected light to convert it to data. This data is temporarily stored in the buffer 42, passed through the processor 43, and written into RAM 46 sequentially to be read as indicated in Fig. 5.

The printable number of dots in one line by the printer 44 are stored in address 45a of ROM 45. It is detected whether the dot data (8 bits) corresponding to address M1 stored in address 45a ( ⓐ in Fig. 5) is 0. Since the dot data is not 0 in this case because the data is a character, the dot data in the address [(address stored in address 45a) + 1] is judged. When the dot data is not 0, the address is further advanced one by one to be detected. When the dot data is judged to be 0, it is the space, and the printing width C is increased. Thereafter, the address is further increased one by one, and the space C is counted. If there is character data before the space width C goes beyond the predetermined value α, it is detected not to be the space between words, but the space between characters. The space width C is returned to be 0. When the space continues a times (ⓑ in Fig. 5), it is detected to be the end of one word. The address at that time is stored in address 46a of RAM 46.

Next, for searching the head of the word, the dot data of the address [(address stored in address 45a) - 1] is judged. If the dot data is not 0, judgement of the dot data is repeated with respect to the address decreased one by one. When the detection that the data is 0 continues for the number of times stored in address 45b (ⓒ in Fig. 5), it is then detected as the head of the word. The address of this data is stored in address 46b of RAM 46.

The data from the first address to the address stored in RAM 46 of the line (ⓒ in Fig. 5) is printed.

Then, the address stored in address 46b (ⓒ in Fig. 5) is moved to the address 46a. With reference to the address added with the printable number of dots in one line to the above address, both the end and the head of a word are detected similarly in the above-described manner. Then, the first address is written in address 46b, and the data from the address 46a to the address 46b is printed. The data in address 46b is moved to address 46a.

The repetition of the above-described procedure will avoid that a word is cut off in the middle thereof in printing.

Although it is arranged in the foregoing embodiment that the end of a word as well as the head thereof is searched, the effects of the present invention can be realized by searching the head of the word only.

It is needless to say that the detection of the space width and the judgement of the space between words may be done by hard process although such detection and judgement are carried out by soft process in the foregoing embodiment.

As is described above, the present embodiment is effective to distinguish the space between two adjacent words from that between two adjacent characters in a word, because of the difference in the space width. Moreover, a word block can be detected.

Further, according to the present invention, such an inconvenience can be advantageously avoided that a word may be interrupted halfway when a line is changed to a new line.

## Claims

1. Word processing system comprising
a scanner unit (41) for reading character information including spaces of different widths between the individual characters,
- a storing means (46) for storing the character information read by said scanner unit (41) as dot image data, and
- a space detection and space judgement means (43) which detects, on the basis of the stored dot image data of the read character information, space widths between the read characters and compares the detected space widths to a preset space width, respectively, with the detected space widths being determined as separations between two adjacent words of the read character information if the detected space width is larger than the preset space width.

2. Word processor according to claim 1, characterized by a block judgement means which detects two successive space widths each detected by said space detection and space judgement means (43) and each being larger than the preset space width so as to determine the data between said two successive space widths as a block forming one word.

3. Word processor according to claim 1 or 2, characterized by a printer (44) for linewise printing the character information read and stored in said storing means (46) and processed by said space detection and space judgement means (43) and block judgement means if provided, and a printing line control means for controlling said space detection and judgement means (43) to detect said space between said two adjacent words contained in first and second consecutive lines of data, said first line is changed to said second line at said space when the data is printed by the printer (44).

## Patentansprüche

1. Textverarbeitungssystem mit
- einer Scannereinheit (41) zum Lesen von Zeicheninformation einschließlich von Zwischenräumen unterschiedlicher Breiten zwischen den einzelnen Zeichen,
- einer Speichereinrichtung (46) zum Speichern der von der Scannereinheit (41) gelesenen Zeicheninformation in Form von Punktbilddaten, und
- einer Zwischenraumdetektions- und Zwischenraumprüfeinrichtung (43), die auf der Basis der gespeicherten Punktbilddaten der gelesenen Zeicheninformation Zwischenraum-Breiten zwischen den gelesenen Zeichen detektiert und die detektierten Zwischenraum-Breiten jeweils mit einer voreingestellten Zwischenraum-Breite vergleicht, wobei die detektierten Zwischenraum-Breiten als Trennungen zwischen zwei benachbarten Wörtern der gelesenen Zeicheninformation aufgefaßt werden, falls die detektierte Zwischenraum-Breite größer als die voreingestellte Zwischenraum-Breite ist.

2. Textverarbeitungssystem nach Anspruch 1, gekennzeichnet durch eine Blockprüfeinrichtung, die zwei jeweils von der Zwischenraumdetektions- und Zwischenraumprüfeinrichtung (43) detektierte und jeweils größer als die voreingestellte Zwischenraum-Breite bemessene aufeinanderfolgende Zwischenraum-Breiten prüft, um festzustellen, ob die Daten zwischen den beiden aufeinanderfolgenden Zwischenraum-Breiten einen ein Wort bildenden Block bilden.

3. Textverarbeitungssystem nach Anspruch 1 oder 2, gekennzeichnet durch einen Drucker (44) zum zeilenweisen Drucken der Zeicheninformation, die gelesen, in der Speichereinrichtung (46) gespeichert und von der Zwischenraumdetektions- und Zwischenraumprüfeinrichtung (43) sowie, falls vorgesehen, von der Blockprüfeinrichtung verarbeitet wird, und durch eine Druckzeilensteuereinrichtung, die die Zwischenraumdetektions- und -prüfeinrichtung (43) derart steuert, daß diese den Zwischenraum zwischen zwei in ersten und zweiten aufeinanderfolgenden Datenzeilen enthaltenen benachbarten Wörtern detektiert, wobei, wenn die Daten von dem Drucker (44) gedruckt werden, die Umschaltung von der ersten Zeile zu der zweiten Zeile in diesem Zwischenraum erfolgt.

## Revendications

1. Système de traitement de texte, comprenant
une unité d'analyse (41) pour lire des informations de caractères comprenant des espaces de largeurs différentes entre les caractères individuels,
des moyens d'emmagasinage (46) pour emmagasiner les informations de caractères lues par ladite unité d'analyse (41) sous la forme de données d'image à points,
des moyens de détection d'espace et de détermination d'espace (43) qui détectent, sur la base des données d'images à points emmagasinées, correspondant aux informations de caractères lues, les largeurs d'espace entre les caractères lus, et comparent les largeurs d'espace détectées à une largeur d'espace pré-établie, respectivement, les largeurs d'espace détectées étant déterminées en tant que séparations entre deux mots adjacents des informations de caractères lues si la largeur d'espace détectée est supérieure à la largeur d'espace pré-établie.

2. Système de traitement de texte selon la revendication 1, caractérisé par des moyens de détermination de blocs qui détectent deux largeurs d'espace successives, détectées chacune par lesdits moyens de détection d'espace et de détermination d'espace (43) et étant chacune supérieures à la largeur d'espace pré-établie, de façon à déterminer les données entre lesdites deux largeurs d'espace successives en tant que bloc formant un mot.

3. Système de traitement de texte selon la revendication 1 ou la revendication 2, caractérisé par une imprimante (44) pour imprimer ligne par ligne les informations de caractères lues et emmagasinées par lesdits moyens d'emmagasinage (46) et traitées par lesdits moyens de détection d'espace et de détermination d'espace (43) et par lesdits moyens de détermination de bloc, le cas échéant, et par des moyens de commande de ligne d'impression qui commandent lesdits moyens de détection d'espace et de détermination d'espace (43) pour détecter ledit espace entre lesdits deux mots adjacents que contiennent des première et seconde lignes consécutives de données, ladite première ligne devenant ladite seconde ligne au niveau dudit espace lorsque les données sont imprimées par l'imprimante (44).
